# EUROPÄISCHE PATENTSCHRIFT

(11) **EP 3 809 011 B1**
(45) Veröffentlichungstag und Bekanntmachung des Hinweises auf die Patenterteilung: **09.11.2022**
(21) Anmeldenummer: 20197961.4
(22) Anmeldetag: 24.09.2020
(51) Int. Cl.: F16F 9/04, B61F 5/10

(54) **LUFTFEDERSYSTEM FÜR SCHIENENFAHRZEUGE**
AIR SUSPENSION SYSTEM FOR RAILWAY VEHICLES
SYSTÈME DE SUSPENSION PNEUMATIQUE POUR VÉHICULES FERROVIAIRES

(30) Priorität: 17.10.2019 DE 102019215962
(43) Veröffentlichungstag der Anmeldung: 21.04.2021
(73) Patentinhaber: ContiTech Luftfedersysteme GmbH, 30165 Hannover (DE)
(72) Erfinder: Kranz, Harald - c/o Continental AG, 30419 Hannover (DE)
(74) Vertreter: Continental Corporation

(56) Entgegenhaltungen:
- CN-A- 108 547 903
- DE-A1-102010 016 359
- DE-B4-102017 218 466

## Beschreibung

### Luftfedersystem für Schienenfahrzeuge

Die vorliegende Erfindung betrifft ein Luftfedersystem für Schienenfahrzeuge mit einer Befestigungsplatte, die ausgestaltet ist, an der Karosserie eines Schienenfahrzeugs befestigt zu werden, mit einem Anschlussteil, das ausgestaltet ist, an einem Fahrwerksteil des Schienenfahrzeugs befestigt zu werden, mit einem Luftfederbalg, der mit einem ersten Ende mit der Befestigungsplatte verbunden ist und der mit einem zweiten Ende, das dem ersten Ende gegenüber liegt mit dem Anschlussteil verbunden ist, wobei der Luftfederbalg derart mit der Befestigungsplatte und dem Anschlussteil verbunden ist, dass zwischen der Befestigungsplatte und dem Anschlussteil ein luftdichter Arbeitsraum gebildet ist, wobei der Luftfederbalg einen ringförmig umlaufenden Wandabschnitt aufweist,

Derartige Luftfedersysteme sind hinlänglich aus dem Stand der Technik wie beispielsweise der DE 10 2017 218 466 B4 bekannt. Bei derartigen Systemen ist ein Luftfederbalg zwischen einer Befestigungsplatte, die an der Karosserie eines Schienenfahrzeugs befestigt werden kann, und einem Anschlussteil angeordnet, das an dem Fahrwerk des Schienenfahrzeugs befestigt werden kann. Innerhalb des Luftfederbalgs ist ein luftdicht abschließbarer Arbeitsraum ausgebildet, der sich zwischen der Befestigungsplatte und dem Anschlussteil erstreckt und diese schwingungstechnisch so miteinander koppelt, dass die Kopplung über das Medium in dem Arbeitsraum sowie den Luftfederbalg selbst erfolgt und somit von dem Druck des Mediums innerhalb des Arbeitsraums abhängt.

Das Dokument CN 108 547 903 A beschreibt ein Luftfedersystem, welches als der nächstliegende Stand der Technik angesehen wird, und offenbart die Merkmale des Oberbegriffs des Anspruchs 1.

Bei derartigen Luftfedersystemen sind sowohl die axiale als auch die laterale Steifigkeit ein Parameter, der, um die Dämpfungseigenschaften des Luftfedersystems genau einstellen zu können, genau spezifiziert wird. Daher besteht ein Bedarf, insbesondere die laterale Steifigkeit sehr genau festlegen zu können.

Diese laterale Steifigkeit - also letztlich die Kraft, der erforderlich ist, um das Anschlussteil in der Ebene, die senkrecht zu der Verbindungsachse zwischen dem Anschlussteil und der Befestigungsplatte verläuft, relativ zu der Befestigungsplatte zu versetzten - wird zunächst durch das Material und den Verlauf der Wandung des Luftfederbalgs bestimmt. Darüber hinaus bestimmt der Druck in dem Arbeitsraum ebenfalls die laterale Steifigkeit. Darüber hinaus ist es jedoch bisher nicht möglich, die laterale Steifigkeit insbesondere bei einmal festgelegter Form der Wandung und festgelegtem Druck im Arbeitsraum zu beeinflussen.

Ausgehend vom Stand der Technik ist es daher die Aufgabe der vorliegenden Erfindung, ein Luftfedersystem der eingangs genannten Art bereitzustellen, bei dem die laterale Steifigkeit, d.h. der Widerstand, den das System einer Relativbewegung des Anschlussteils zu der Befestigungsplatte in einer Richtung senkrecht zu der Achse, entlang derer die Befestigungsplatte und das Anschlussteil miteinander gekoppelt sind, einzustellen.

Erfindungsgemäß wird diese Aufgabe durch ein Luftfedersystem für Schienenfahrzeuge gelöst mit einer Befestigungsplatte, die ausgestaltet ist, an der Karosserie eines Schienenfahrzeugs befestigt zu werden, mit einem Anschlussteil, das ausgestaltet ist, an einem Fahrwerksteil des Schienenfahrzeugs befestigt zu werden, mit einem Luftfederbalg, der mit einem ersten Ende mit der Befestigungsplatte verbunden ist und der mit einem zweiten Ende, das dem ersten Ende gegenüber liegt, mit dem Anschlussteil verbunden ist, wobei der Luftfederbalg derart mit der Befestigungsplatte und dem Anschlussteil verbunden ist, dass zwischen der Befestigungsplatte und dem Anschlussteil ein luftdichter Arbeitsraum gebildet ist, wobei der Luftfederbalg einen ringförmig umlaufenden Wandabschnitt aufweist, wobei an dem umlaufenen Wandabschnitt ein um den Wandabschnitt umlaufender elektrischer Leiter vorgesehen ist, der fest mit dem Wandabschnitt verbunden ist, wobei das Luftfedersystem einen Kernabschnitt aus para- oder ferromagnetischen Material aufweist, dessen Projektion auf die Ebene, in der sich der umlaufende Leiter erstreckt innerhalb des umlaufenden Leiters angeordnet ist, und mit einer Steuereinrichtung, die ausgestaltet ist, den umlaufenden Leiter so mit einer Spannung zu beaufschlagen, sodass ein Strom durch den umlaufenden Leiter fließt.

Bei dem erfindungsgemäßen Aufbau des Luftfedersystems kann der umlaufende Wandabschnitt eine Bewegung senkrecht zu der Achse ausführen, die sich senkrecht zu der Ebene der Befestigungsplatte zwischen dieser und dem Anschlussteil erstreckt. Dies wiederum führt zu einer Bewegung des Anschlussteils relativ zu der Befestigungsplatte ebenfalls in dieser Richtung. Wenn nun der Widerstand, der einer solchen Bewegung entgegen gesetzt wird, eingestellt werden kann, kann dadurch auch die laterale Steifigkeit des Gesamtsystems beeinflusst werden.

Um dies wiederum zu erreichen, ist erfindungsgemäß vorgesehen, dass im Bereich des umlaufenden Wandabschnitts, vorzugsweise zwischen Zwischenabschnitten der Wandung des Luftfederbalgs, ein umlaufender elektrischer Leiter vorgesehen ist, der über eine Steuereinrichtung so mit einer Spannung beaufschlagt werden kann, dass ein Strom durch den Leiter fließt und so ähnlich einer Spule ein sich senkrecht zur Ebene des Leiters erstreckendes Magnetfeld erzeugt.

Dieses Magnetfeld tritt erfindungsgemäß in Wechselwirkung mit dem Kernabschnitt, der beispielsweise durch das Anschlussteil und/oder die Befestigungsplatte gebildet sein kann bzw. einen Abschnitt jeweils davon bildet, und der aus para- oder ferromagnetischen Material gebildet ist. Da dieser Kernabschnitt aus dem genannten Material gebildet ist, wird aufgrund des Magnetfelds, das durch den Strom in dem elektrischen Leiter hervorgerufen wird, eine Kraft erzeugt, die einer Bewegung des elektrischen Leiters relativ zu dem Kernabschnitt in der Ebene, die durch den elektrischen Leiter definiert ist, entgegen wirkt. Dabei hängt die Größe der Kraft von der Stärke des Magnetfelds ab, das von dem Strom, der durch den elektrischen Leiter fließt, erzeugt wird.

Die Kraft, die so auf den elektrischen Leiter wirkt, erhöht die Steifigkeit des Gesamtsystems in lateraler Richtung (laterale Steifigkeit). Da diese Kraft wiederum nur von dem Strom abhängt, kann die laterale Steifigkeit über den durch den Leiter fließenden Strom und damit durch die von der Steuereinrichtung vorgegebene Spannung eingestellt werden.

Bei einer bevorzugten Ausführungsform ist der Luftfederbalg derart aufgebaut, dass die Wandung des Luftfederbalgs zwischen dem ersten Ende und dem umlaufenden Wandabschnitt einen ersten umlaufenden Zwischenabschnitt aufweist, wobei die Wandung des Luftfederbalgs zwischen dem zweiten Ende und dem umlaufenden Wandabschnitt einen zweiten umlaufenden Zwischenabschnitt aufweist. Bei einem solchen Aufbau ist es von den Abschnitten der Wandung der umlaufende Wandabschnitt, der in lateraler Richtung die größte Bewegung ausführen kann. Dadurch wiederum kann die laterale Steifigkeit des Luftfederbalgs durch den umlaufenden Leiter effektiv beeinflusst werden, da dieser an dem umlaufende Wandabschnitt angebracht ist.

In einer bevorzugten Ausführungsform ist der Kernabschnitt aus einem Material gebildet, das ausgewählt ist aus der Gruppe umfassend AlNiCo, SmCo, Nd2Fel4B, Ni80Fe20, oder NiFeCo-Legierungen. Bei Wahl eines dieser Materialien wird erreicht, dass der Kernabschnitt eine hohe Permeabilität aufweist, so dass schon vergleichsweise niedrige Ströme ausreichend sind, die laterale Steifigkeit in hohem Umfang zu beeinflussen, da dann die auf den Leiter in der Ebene, in der sich dieser erstreckt, verlaufende Kraft sehr groß ist.

In einer weiteren bevorzugten Ausführungsform kann das Anschlussteil vollständig durch den Kernabschnitt ausgebildet sein, d.h. das gesamte Anschlussteil bildet den Kernabschnitt. Dadurch wird ein großer Teil des Luftfedersystems durch von dem Magnetfeld, das von dem umlaufenden Leiter erzeugt wird, magnetisiert, so dass auch dadurch die Kraft, die in lateraler Richtung zur Stabilisierung wirkt, weiter erhöht wird.

Weiterhin ist es bevorzugt, wenn der Leiter in dem umlaufenden Wandabschnitt eingelassen ist, so dass er vollständig von Material des Wandabschnitts umgeben ist. Dadurch ist der Leiter gegenüber Umwelteinflüssen geschützt.

Alternativ kann der umlaufende Leiter allerdings auch entweder auf der von dem Arbeitsraum abgewandten oder an der dem Arbeitsraum zugewandten Seite des umlaufenden Wandabschnitts angebracht werden. Denkbar ist auch, dass je ein Leiter auf jeder der Seiten angebracht. Ist ein Leiter auf der Außenwandung angebracht, ermöglicht dies insbesondere, bereits existierende Luftfedersysteme nachzurüsten. Ist er im Inneren angebracht, ist er auch bei dieser Ausführungsform gut geschützt. Zudem kann ein Nachrüsten auch dann ermöglicht werden, da der Leiter im Falle eines Austauschs oder eines Öffnens des Luftfedersystems auf bereits existierende Luftfederbälge aufgebracht werden kann.

Weiterhin ist es möglich, dass der umlaufende Leiter als gegebenenfalls mehrfach umlaufend am Draht oder als ein Geflecht ausgebildet ist, das an dem umlaufenden Wandabschnitt befestigt ist.

Ist der Leiter als Geflecht ausgebildet, kann er gleichzeitig eine Verstärkungsfunktion wahrnehmen, mit der die Wandung und insbesondere der umlaufende Wandabschnitt des Luftfederbalgs gegen Rissbildung verstärkt wird.

Im Folgenden wird die vorliegende Erfindung anhand einer lediglich bevorzugte Ausführungsbeispiele zeigenden Zeichnung erläutert, wobei
Fig. 1 ein Schienenfahrzeug mit einem Ausführungsbeispiel eines erfindungsgemäßen Luftfedersystems zeigt,
Fig. 2 ein erstes Ausführungsbeispiel eines erfindungsgemäßen Luftfedersystems im Querschnitt zeigt,
Fig. 3 ein zweites Ausführungsbeispiel eines erfindungsgemäßen Luftfedersystems im Querschnitt zeigt,
Fig. 4 ein drittes Ausführungsbeispiel eines erfindungsgemäßen Luftfedersystems im Querschnitt zeigt und
Fig. 5 ein fünftes Ausführungsbeispiel eines erfindungsgemäßen Luftfedersystems im Querschnitt zeigt.

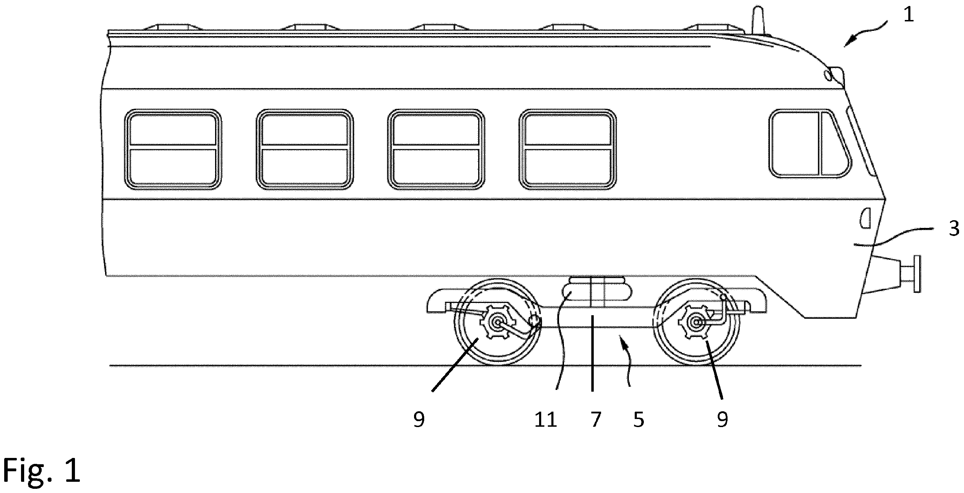

Zunächst geht aus Fig. 1 hervor, in welcher Weise die im Folgenden beschriebenen Ausführungsbeispiele erfindungsgemäßer Luftfedersysteme an einem Schienenfahrzeug 1 verwendet werden können, das in dem hier gezeigten Beispiel als Triebwagen dargestellt ist, aber auch jedes andere Schienenfahrzeug sein kann.

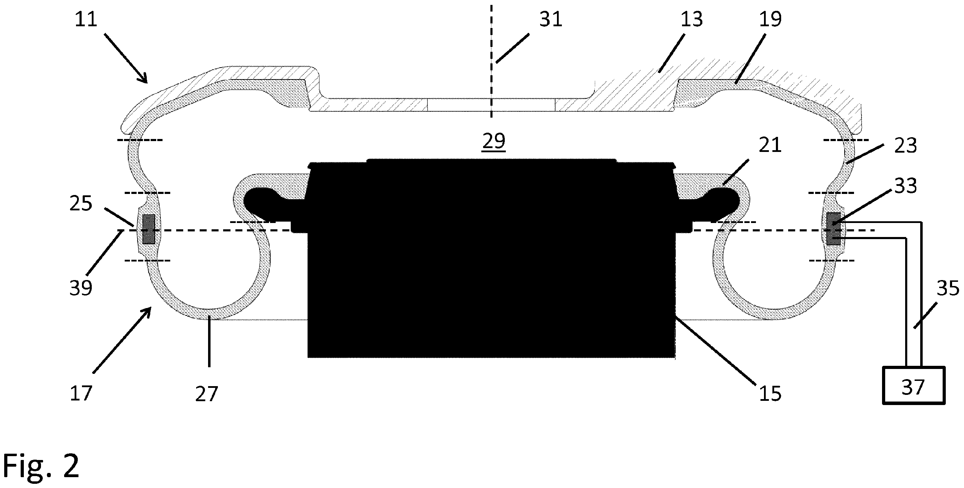

Das Schienenfahrzeug 1 weist eine Karosserie 3 sowie ein Fahrgestell 5 auf, dass unter anderem ein Fahrwerksteil 7 umfasst, das mit Rädern 9 des Fahrgestells 5 verbunden ist. Zwischen der Karosserie 3 und dem Fahrgestell 5 ist ein Luftfedersystem 11 angebracht, über das das Fahrgestell 5 und insbesondere das Fahrwerksteil 7 mit der Karosserie 3 gekoppelt ist. Ausführungsbeispiele für derartige Luftfedersysteme 11, die gemäß der vorliegenden Erfindung aufgebaut sind, werden nun unter Bezugnahme auf die Figuren 2 bis 5 beschrieben.

Bei dem ersten, in Figur 2 gezeigten Ausführungsbeispiel eines erfindungsgemäßen Luftfedersystems 11 ist zunächst eine Befestigungsplatte 13 vorgesehen, die mit der Karosserie 3 des Schienenfahrzeugs 1 fest verbunden ist. Außerdem weist das Luftfedersystem 11 ein Anschlussteil 15 auf, das an dem Fahrwerksteil 7 des Fahrwerks 5 des Schienenfahrzeugs 3 befestigt ist. Zwischen der Befestigungsplatte 13 und dem Anschlussteil 15 ist ein Luftfederbalg 17 angeordnet, der aus einem elastischen Material wie beispielsweise Gummi gebildet ist und über den das Anschlussteil 15 mit der Befestigungsplatte 13 gekoppelt ist. Der Luftfederbalg 17 ist im wesentlichen rotationssymmetrisch ausgebildet und weist ein erstes Ende 19 auf, das mit der Befestigungsplatte 13 fest verbunden ist. Darüber hinaus ist an dem Luftfederbalg 17 ein zweites Ende 21 vorgesehen, das wiederum fest mit dem Anschlussteil 15 verbunden ist.

Zwischen dem erste Ende 19 und dem zweiten Ende 21 des Luftfederbalgs 18 erstrecken sich nacheinander mehrere Wandabschnitte. An das erste Ende 19 schließt sich ein erster umlaufender Zwischenabschnitt 23 unmittelbar an. An diesem wiederum schließt sich ein ringförmig umlaufender Wandabschnitt 25 an. Der umlaufende Wandabschnitt 25 ist wiederum über einen zweiten Zwischenabschnitt 27 mit dem zweiten Ende 21 des Luftfederbalgs 17 verbunden, sodass der zweite Zwischenabschnitt 27 zwischen dem umlaufenden Wandabschnitt 25 und dem zweiten Ende 21 verläuft.

Innerhalb des Luftfederbalgs 17 ist ein luftdicht abschließbarer Arbeitsraum 29 gebildet, der entlang einer Achse 31, die sich senkrecht zu der Ebene der Befestigungsplatte 13 erstreckt, zwischen dem Anschlussteil 15 und der Befestigungsplatte 13 ausgebildet ist und der die Befestigungsplatte 13 und das Anschlussteil 15 schwingungstechnisch miteinander koppelt. Durch Wahl des Drucks des gasförmigen Mediums in dem Arbeitsraum 29 können die Dämpfungseigenschaften des Luftfederbalgs 17 eingestellt werden.

Erfindungsgemäß ist bei dem hier beschriebenen bevorzugten Ausführungsbeispiel das Anschlussteil 15 vollständig als Kernabschnitt aus einem ferromagnetischen Material ausgebildet. Dabei kann das Material des Anschlussteils ausgewählt sein aus der Gruppe umfassend AlNiCo, SmCo, Nd2Fe14B, Ni80Fe20, oder NiFeCo-Legierungen. Allerdings ist es auch denkbar, dass nur ein Teil des Anschlussteils 15 oder der Befestigungsplatte 13 aus einem para- der ferromagnetischen Material gebildet sind.

Wie weiter aus Figur 2 zu erkennen ist, weist der Luftfederbalg 17 des Ausführungsbeispiels gemäß dieser Figur einen in dem ringförmigen umlaufenden Wandabschnitt 25 eingelassenen umlaufenden elektrischen Leiter 33 auf, der über Leitungen 35 mit einer Steuereinheit 37 elektrisch verbunden ist. Dabei sind der elektrische Leiter 33 und das Anschlussteil bzw. der Kernabschnitt 13 derart relativ zueinander angeordnet, dass sich das Anschlussteil 13 in die Ebene 39 erstreckt, in der der Leiter 33 umläuft, und innerhalb des Leiters 33 angeordnet.

Es ist aber auch möglich, dass der Leiter 33 und das Anschlussteil 13 bzw. der Kernabschnitt so zueinander angeordnet sind, dass die Projektion des Anschlussteils 13 bzw. des Kernabschnitts auf die Ebene (39), in der sich der umlaufende Leiter (33) erstreckt, innerhalb des umlaufenden Leiters (33) angeordnet ist.

Der elektrische Leiter 33, der in dem umlaufenden Wandabschnitt 25 umläuft, kann über die elektrische Steuereinrichtung mit einer Spannung beaufschlagt werden, so dass ein Strom durch den umlaufenden Leiter 33 fließt. Der Strom wiederum erzeugt ein Magnetfeld, das ähnlich dem einer Spule verläuft und das den Kernabschnitt bzw. das ferromagnetische Anschlussteil 13 magnetisiert. Das Magnetfeld des Leiters 33 und das magnetisierte Anschlussteil wirken so zusammen, dass der umlaufende Wandabschnitt 25 in der Ebene 39, in der der Leiter 33 umläuft, mit einer Kraft beaufschlagt wird, die den umlaufenden Leiter 33 relativ zu dem Anschlussteil 15 bzw. dem Kernabschnitt zentriert. Dadurch wiederum wird die laterale Steifigkeit des Luftfedersystems 11, das in Figur 2 gezeigt ist, vergrößert, d. h. die Kraft, die erforderlich ist, um das Anschlussteil 15 in der Ebene 39 relativ zu der Befestigungsplatte 13 zu bewegen, ist größer im Vergleich zu dem Fall, wo der Leiter 33 nicht mit einer Spannung beaufschlagt wird, so dass kein Strom durch diesen fließt.

Durch Einstellung der Spannung bzw. des Stroms der durch den elektrischen Leiter 33 fließt, kann die laterale Steifigkeit des Luftfedersystems 11 eingestellt werden.

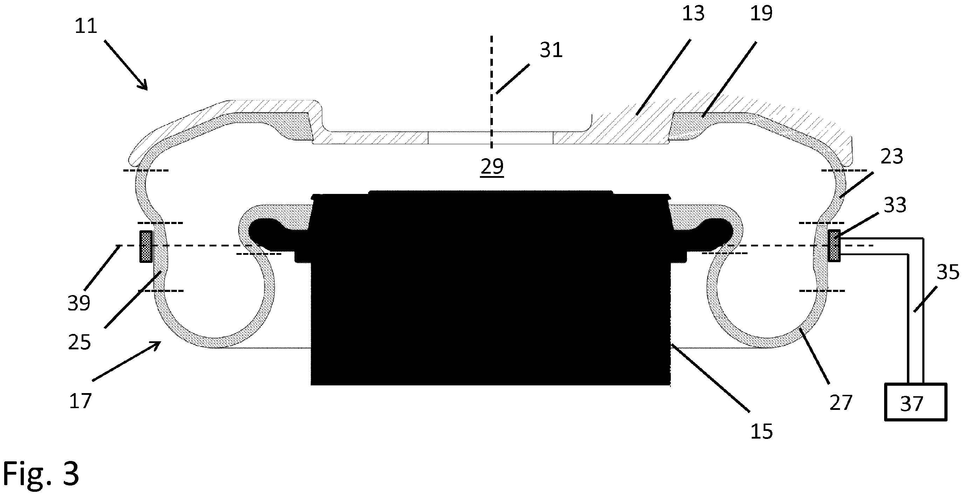

Die im Folgenden beschriebenen Ausführungsbeispiele gemäß den Fig. 3 bis 5 unterscheiden sich von dem aus Fig. 2 lediglich dadurch, in welcher Weise der Leiter 33 ausgebildet und mit dem ringförmig umlaufenden Wandabschnitt 25 verbunden ist.

Das in Fig. 3 gezeigte zweite Ausführungsbeispiel eines erfindungsgemäßen Luftfedersystems 11 unterscheidet sich von dem ersten, in Fig. 2 gezeigten dadurch, dass in diesem Fall der elektrische Leiter 33 an der Außenseite der Wandung des Luftfederbalgs und zwar im Bereich des umlaufenden Wandabschnitts 25 angebracht ist. Das Anbringen auf der Außenseite des umlaufenden Wandabschnitts 25 ermöglicht, dass dann, wenn das Anschlussteil 15 bereits aus beispielsweise ferromagnetischem Material gebildet ist, das erfindungsgemäße System nachgerüstet werden kann. Bei dem in Fig. 3 gezeigten Ausführungsbeispiel ist es ohne weiteres möglich, die laterale Steifigkeit des Luftfedersystems 11 durch Wahl des Stroms, mit dem elektrischen Leiter 33 an der Steuereinrichtung 37 beaufschlagt wird, einzustellen.

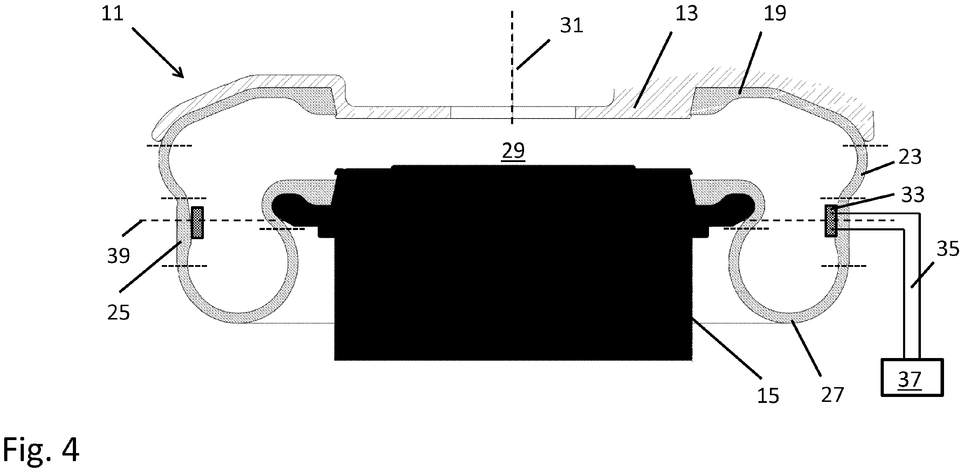

Bei dem dritten, in Fig. 4 dargestellten Ausführungsbeispiel eines erfindungsgemäßen Luftfedersystems 11 ist der elektrische Leiter 33 im Unterschied zu dem zweiten Ausführungsbeispiel auf der Innenseite der umlaufenden Wandung 25 angeordnet, also auf der Seite der Wandung, die zu dem Arbeitsraum 29 weist. In diesem Fall ist der elektrische Leiter 33 gegenüber der Umgebung geschützt, so dass die Gefahr, dass er beschädigt wird, verringert ist.

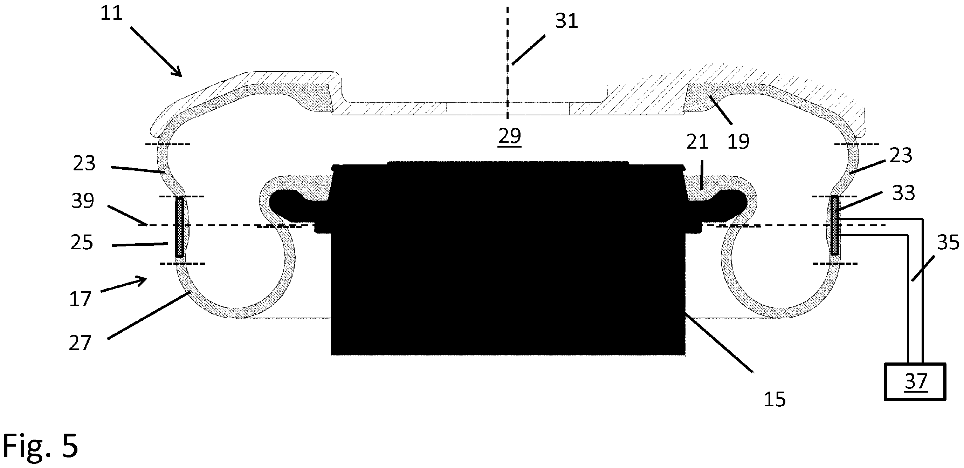

Bei dem vierten, in Fig. 5 dargestellten Ausführungsbeispiel eines erfindungsgemäßen Luftfedersystems 11 ist der elektrische Leiter 33, wie schematisch dargestellt, als ein Geflecht ausgebildet, das in den umlaufenden Wandabschnitt 25 eingelassen ist und durch den insbesondere der umlaufende Wandabschnitt 25 verstärkt wird, so dass es weniger leicht zu einer Rissbildung in diesem Bereich kommen kann.

Einem Ausführungsbeispiel eines erfindungsgemäßen Federsystems 11 ist gemeint, dass durch Wahl oder Einstellung des Stroms, mit dem der umlaufende elektrische Leiter beaufschlagt wird, die laterale Steifigkeit des Systems eingestellt werden kann. Insbesondere kann dadurch die Kraft eingestellt werden, die erforderlich ist, das Anschlussteil 15 relativ zu der Befestigungsplatte 13 in der Ebene 39 zu bewegen, in der der Leiter 33 verläuft, also die Kraft, die die laterale Steifigkeit wiedergibt.

### Bezugszeichenliste:

- 1: Schienenfahrzeug
- 3: Karoserie
- 5: Fahrgestell
- 7: Fahrwerksteil
- 9: Rad
- 11: Luftfedersystem
- 13: Befestigungsplatte
- 15: Anschlussteil
- 17: Luftfederbalg
- 19: erstes Ende
- 21: zweites Ende
- 23: erster Zwischenabschnitt
- 25: umlaufender Wandabschnitt
- 27: zweiter Zwischenabschnitt
- 29: Arbeitsraum
- 31: Achse
- 33: elektrischer Leiter
- 35: Leitung
- 37: Steuereinrichtung
- 39: Ebene

## Patentansprüche

1. Luftfedersystem für Schienenfahrzeuge (1)
mit einer Befestigungsplatte (13), die ausgestaltet ist, an der Karosserie (3) eines Schienenfahrzeugs (1) befestigt zu werden,
mit einem Anschlussteil (15), das ausgestaltet ist, an einem Fahrwerksteil (7) des Schienenfahrzeugs (1) befestigt zu werden,
mit einem Luftfederbalg (17), der mit einem ersten Ende (19) mit der Befestigungsplatte (13) verbunden ist und der mit einem zweiten Ende (21), das dem ersten Ende (19) gegenüber liegt, mit dem Anschlussteil (15) verbunden ist,
wobei der Luftfederbalg (17) derart mit der Befestigungsplatte (13) und dem Anschlussteil (15) verbunden ist, dass zwischen der Befestigungsplatte (13) und dem Anschlussteil (15) ein luftdichter Arbeitsraum (29) gebildet ist,
wobei der Luftfederbalg (17) einen ringförmig umlaufenden Wandabschnitt (25) aufweist,
**dadurch gekennzeichnet, dass**
an dem umlaufenen Wandabschnitt (25) ein um den Wandabschnitt (25) umlaufender elektrischer Leiter (33) vorgesehen ist, der fest mit dem Wandabschnitt (25) verbunden ist,
wobei das Luftfedersystem einen Kernabschnitt aus para- oder ferromagnetischen Material aufweist, dessen Projektion auf die Ebene (39), in der sich der umlaufende Leiter (33) erstreckt, innerhalb des umlaufenden Leiters (33) angeordnet ist, und
mit einer Steuereinrichtung (37), die ausgestaltet ist, den umlaufenden Leiter (33) so mit einer Spannung zu beaufschlagen, sodass ein Strom durch den umlaufenden Leiter (33) fließt.

2. Luftfedersystem nach Anspruch 1, wobei die Wandung (23, 25, 27) des Luftfederbalgs (17) zwischen dem ersten Ende (19) und dem umlaufenden Wandabschnitt (25) einen ersten umlaufenden Zwischenabschnitt (23) aufweist und
wobei die Wandung (23, 25, 27) des Luftfederbalgs (17) zwischen dem zweiten Ende (21) und dem umlaufenden Wandabschnitt (25) einen zweiten umlaufenden Zwischenabschnitt (27) aufweist.

3. Luftfedersystem nach Anspruch 1 oder 2, wobei das para- oder ferromagnetische Material ausgewählt ist aus der Gruppe umfassend AlNiCo, SmCo, Nd2Fe14B, Ni80Fe20, oder NiFeCo-Legierungen.

4. Luftfedersystem nach einem oder mehreren der Ansprüche 1 bis 3, wobei der Kernabschnitt zumindest einen Abschnitt des Anschlussteils (15) bildet.

5. Luftfedersystem nach Anspruch 4, wobei Anschlussteil (15) vollständig durch den Kernabschnitt gebildet ist.

6. Luftfedersystem nach einem oder mehreren der Ansprüche 1 bis 5, wobei der Kernabschnitt zumindest einen Teil der Befestigungsplatte (13) bildet.

7. Luftfedersystem nach einem oder mehreren der Ansprüche 1 bis 6, wobei der umlaufende Leiter (33) in den umlaufenden Wandabschnitt (25) eingelassen ist.

8. Luftfedersystem nach einem oder mehreren der Ansprüche 1 bis 7, wobei der umlaufende Leiter (33) an der von dem Arbeitsraum (29) weg weisenden Außenseite des umlaufenden Wandabschnitts (25) befestigt ist.

9. Luftfedersystem nach einem oder mehreren der Ansprüche 1 bis 8, wobei der umlaufende Leiter (33) an der zu dem Arbeitsraum (29) weisenden Innenseite des umlaufenden Wandabschnitts (25) befestigt ist.

10. Luftfedersystem nach einem oder mehreren der Ansprüche 1 bis 9, wobei der umlaufende Leiter (33) als entlang des umlaufenden Wandabschnitts (25) umlaufender Draht ausgebildet ist, sodass entlang des umlaufenden Wandabschnitts (25) eine Spule gebildet ist.

11. Luftfedersystem nach einem oder mehreren der Ansprüche 1 bis 9, wobei der umlaufende Leiter (33) als entlang des umlaufenden Wandabschnitts (25) umlaufendes Geflecht ausgebildet ist.

## Claims

1. Air spring system for rail vehicles (1)
with a fastening plate (13) which is configured to be fastened to the body (3) of a rail vehicle (1),
with a connector part (15) which is configured to be fastened to a chassis part (7) of the rail vehicle (1),
with an air spring bellows (17) which is connected by way of a first end (19) to the fastening plate (13) and which is connected by way of a second end (21), which lies opposite the first end (19), to the connector part (15),
the air spring bellows (17) being connected to the fastening plate (13) and the connector part (15) in such a way that an air-tight working space (29) is formed between the fastening plate (13) and the connector part (15),
the air spring bellows (17) having an annularly circumferential wall section (25),
**characterized in that**
an electrical conductor (33) which runs around the wall section (25) and is connected fixedly to the wall section (25) is provided on the circumferential wall section (25),
the air spring system having a core section made from paramagnetic or ferromagnetic material, the projection of which onto the plane (39), in which the circumferential conductor (33) extends, is arranged within the circumferential conductor (33), and
with a control device (37) which is configured to load the circumferential conductor (33) with a voltage such that a current flows through the circumferential conductor (33).

2. Air spring system according to Claim 1, the wall (23, 25, 27) of the air spring bellows (17) having a first circumferential intermediate section (23) between the first end (19) and the circumferential wall section (25), and
the wall (23, 25, 27) of the air spring bellows (17) having a second circumferential intermediate section (27) between the second end (21) and the circumferential wall section (25).

3. Air spring system according to Claim 1 or 2, the paramagnetic or ferromagnetic material being selected from the group comprising AINiCo, SmCo, Nd2Fe14B, Ni80Fe20 or NiFeCo alloys.

4. Air spring system according to one or more of Claims 1 to 3, the core section forming at least one section of the connector part (15).

5. Air spring system according to Claim 4, the connector part (15) being formed completely by way of the core section.

6. Air spring system according to one or more of Claims 1 to 5, the core section forming at least one part of the fastening plate (13).

7. Air spring system according to one or more of Claims 1 to 6, the circumferential conductor (33) being embedded in the circumferential wall section (25).

8. Air spring system according to one or more of Claims 1 to 7, the circumferential conductor (33) being fastened to that outer side of the circumferential wall section (25) which points away from the working space (29).

9. Air spring system according to one or more of Claims 1 to 8, the circumferential conductor (33) being fastened to that inner side of the circumferential wall section (25) which points towards the working space (29).

10. Air spring system according to one or more of Claims 1 to 9, the circumferential conductor (33) being configured as a wire which runs around along the circumferential wall section (25), with the result that a coil is formed along the circumferential wall section (25).

11. Air spring system according to one or more of Claims 1 to 9, the circumferential conductor (33) being configured as a mesh which runs around along the circumferential wall section (25).

## Revendications

1. Système de suspension pneumatique destiné à des véhicules ferroviaires (1), ledit système comprenant
une plaque de fixation (13) destinée à être fixée à la carrosserie (3) d'un véhicule ferroviaire (1),
une pièce de raccordement (15) destinée à être fixée à une partie formant mécanisme de roulement (7) du véhicule ferroviaire (1),
un soufflet de suspension pneumatique (17) qui est relié à la plaque de fixation (13) par une première extrémité (19) et qui est relié à la pièce de raccordement (15) par une deuxième extrémité (21) qui est opposée à la première extrémité (19),
les soufflets de suspension pneumatique (17) étant reliés à la plaque de fixation (13) et à la pièce de raccordement (15) de manière à ménager un espace de travail (29) étanche à l'air entre la plaque de fixation (13) et la pièce de raccordement (15),
le soufflet de suspension pneumatique (17) comportant une portion de paroi périphérique annulaire (25),
**caractérisé en ce que**
la portion de paroi périphérique (25) est pourvue d'un conducteur électrique (33) qui s'étend autour de la portion de paroi (25) et qui est relié de manière fixe à la portion de paroi (25),
le système de suspension pneumatique comportant une portion centrale en matériau paramagnétique ou ferromagnétique dont la projection sur le plan (39) dans lequel s'étend le conducteur périphérique (33) est située à l'intérieur du conducteur périphérique (33), et comprenant
un dispositif de commande (37) qui est conçu pour appliquer une tension sur le conducteur périphérique (33) de manière à ce qu'un courant circule à travers le conducteur périphérique (33).

2. Système de suspension pneumatique selon la revendication 1, la paroi (23, 25, 27) du soufflet de suspension pneumatique (17) comporte une première portion intermédiaire périphérique (23) entre la première extrémité (19) et la portion de paroi périphérique (25), et
la paroi (23, 25, 27) du soufflet de suspension pneumatique (17) comportant une deuxième portion intermédiaire périphérique (27) entre la deuxième extrémité (21) et la portion de paroi périphérique (25).

3. Système de suspension pneumatique selon la revendication 1 ou 2, le matériau paramagnétique ou ferromagnétique étant choisi dans le groupe comprenant les alliages AlNiCo, SmCo, Nd2Fe14B, Ni80Fe20 ou NiFeCo.

4. Système de suspension pneumatique selon une ou plusieurs des revendications 1 à 3, la portion centrale formant au moins une portion de la partie de raccordement (15).

5. Système de suspension pneumatique selon la revendication 4, la pièce de raccordement (15) étant formée entièrement par la portion centrale.

6. Système de suspension pneumatique selon une ou plusieurs des revendications 1 à 5, la portion centrale formant au moins une partie de la plaque de fixation (13).

7. Système de suspension pneumatique selon une ou plusieurs des revendications 1 à 6, le conducteur périphérique (33) étant encastré dans la portion de paroi périphérique (25).

8. Système de suspension pneumatique selon une ou plusieurs des revendications 1 à 7, le conducteur périphérique (33) étant fixé au côté extérieur de la portion de paroi périphérique (25) qui est tourné à l'opposé de l'espace de travail (29).

9. Système de suspension pneumatique selon une ou plusieurs des revendications 1 à 8, le conducteur périphérique (33) étant fixé au côté intérieur de la portion de paroi périphérique (25) qui est tourné vers l'espace de travail (29).

10. Système de suspension pneumatique selon une ou plusieurs des revendications 1 à 9, le conducteur périphérique (33) étant conçu comme un fil courant autour de la portion de paroi périphérique (25) de façon à former une bobine le long de la portion de paroi périphérique (25).

11. Système de suspension pneumatique selon une ou plusieurs des revendications 1 à 9, le conducteur périphérique (33) étant conçu comme une tresse courant autour de la portion de paroi périphérique (25).
